Europäisches Patentamt

European Patent Office

Office européen des brevets

(19)

(11) Veröffentlichungsnummer: **0 082 512**
**A1**

(12) # EUROPÄISCHE PATENTANMELDUNG

(21) Anmeldenummer: 82111798.3

(22) Anmeldetag: 20.12.82

(51) Int. Cl.³: **H 04 M 1/57**

(30) Priorität: 23.12.81 DE 3151172

(43) Veröffentlichungstag der Anmeldung:
29.06.83 Patentblatt 83/26

(84) Benannte Vertragsstaaten:
AT FR GB NL SE

(71) Anmelder: SIEMENS AKTIENGESELLSCHAFT
Berlin und München Wittelsbacherplatz 2
D-8000 München 2(DE)

(72) Erfinder: Springer, Norbert
Hainbuchenstrasse 74
D-8028 Taufkirchen(DE)

(72) Erfinder: Unger, Wolfgang
Hunkelestrasse 8
D-8000 München 71(DE)

(54) Verfahren zur Übertragung alphanumerischer Zeichen.

(57) Die Erfindung betrifft ein Verfahren zur Übertragung alphanumerischer Zeichen an eine über eine Zweidrahtleitung (a.b) angeschlossene Teilnehmerstation (B-TLN) in Fernmeldevermittlungsanlagen, wobei die Übertragung in vorhandenen analogen Fernsprechsystemen über die Sprachkommunikation hinaus mit einfachen Mitteln und ohne große Eingriffe in das bestehende System möglich sein soll. Erfindungsgemäß wird dies erreicht, indem vor Aussenden des ersten Ruftons bei unterbrochener Speisung einer Teilnehmerstation (B-TLN) mittels einer getakteten Tonfrequenz aus der Vermittlungsanlage heraus Informationen zur Teilnehmerstation (B-TLN) übertragen und dort angezeigt werden.

FIG 2

Croydon Printing Company Ltd.

EP 0 082 512 A1

0082512

SIEMENS AKTIENGESELLSCHAFT
Berlin und München

Unser Zeichen
VPA 81 P 6 0 3 9 E

## Verfahren zur Übertragung alphanumerischer Zeichen

Die Erfindung betrifft ein Verfahren zur Übertragung alphanumerischer Zeichen an eine über eine Zweidrahtleitung angeschlossene Teilnehmerstation in Fernmeldevermittlungsanlagen, insbesondere Fernsprechnebenstellenanlagen.

Es ist bekannt zukünftige digitale Fernsprechendgeräte sowohl als Komfortfernsprecher für die Sprachkommunikation als auch für Datenkommunikation einzusetzen. Dabei werden die digitalen Fernsprechendgeräte über zwei Leitungsadern an PCM-Vermittlungen angeschlossen und bieten je Richtung neben einem 64-kbit/s-Nutzkanal einen 8-kbit/s-Signalisierungskanal, wodurch zwischen der Vermittlung und dem Endgerät ohne Beeinflussung der Nutzinformation, d.h. der codierten Sprache, Signalisierung ausgetauscht werden kann (siehe z.B."ntz", Band 33 (1980) Heft 12, Seiten 802 bis 806). Derartige digitale Fernsprechendgeräte können jedoch erst dann zum Einsatz kommen, wenn das gesamte Fernsprechnetz digitalisiert sein wird.

Aufgabe der vorliegenden Erfindung ist es, ein Verfahren anzugeben, mit dem in vorhandenen analogen Fernsprechsystemen über die Sprachkommunikation hinaus mit einfachen zusätzlichen Mitteln ohne große Eingriffe in die bestehenden Systeme eine Übertragung von Daten aus der Anlage heraus zu einer Teilnehmerstation möglich ist.

Diese Aufgabe wird für ein Verfahren der eingangs genannten Art erfindungsgemäß dadurch gelöst, daß die alpha-

Som 1 BO / 22.12.1981

numerischen Zeichen im Binärcode mittels einer getakteten Tonfrequenz von einem Internsatz der Fernsprechnebenstellenanlage über die Anschlußleitung der Teilnehmerstation zu einem der eigentlichen Teilnehmerstation parallel geschalteten Tonempfänger übertragen werden, wobei vor Übertragung des ersten Ruftons der Speisestrom für die angewählte Teilnehmerstation unterbrochen und nach Übertragung der alphanumerischen Zeichen der Speisestrom wieder angelegt wird und der Rufton ausgesendet wird.

Mit Hilfe des erfindungsgemäßen Verfahrens ist es z.B. in vorhandenen analogen Fernsprechsystemen möglich ohne große Eingriffe in das bestehende System die Rufnummer des anrufenden Teilnehmers an der angerufenen Teilnehmerstation anzuzeigen. Dazu sind in der zentralen Vermittlung keine großen Eingriffe notwendig, wobei der zusätzliche Aufwand verhältnismäßig gering ist. Aufgrund der Benutzung eines parallel geschalteten Tonempfängers an der Teilnehmerstation ist auch ein Eingriff in die vorhandenen Teilnehmerstationen nicht notwendig. Neben der Übertragung der Rufnummer des rufenden Teilnehmers, die besondere einfach ist, da die zentrale Vermittlung die notwendigen Informationen besitzt, ist es mit dem erfindungsgemäßen Verfahren auch möglich, Ziffern an die gerufene Teilnehmerstation zu übertragen, die vom rufenden Teilnehmer aufgrund einer besonders gekennzeichneten Wahl eingegeben werden.

Vorteilhafte Weiterbildungen des erfindungsgemäßen Verfahrens ergeben sich aus den Unteransprüchen sowie aus der nachfolgenden Beschreibung.

Das erfindungsgemäße Verfahren soll anhand einer Zeichnung näher beschrieben werden.

FIG 1 zeigt den grundsätzlichen Aufbau einer Fernsprechnebenstellenanlage, bei der das erfindungsgemäße
Verfahren eingesetzt werden kann.

FIG 2 zeigt den grundsätzlichen Aufbau einer Verbindung gemäß des erfindungsgemäßen Verfahrens zur Übertragung von alphanumerischen Zeichen an eine Teilnehmerstation sowie den grundsätzlichen Aufbau eines der
Teilnehmerstation parallel geschalteten Tonempfängers.

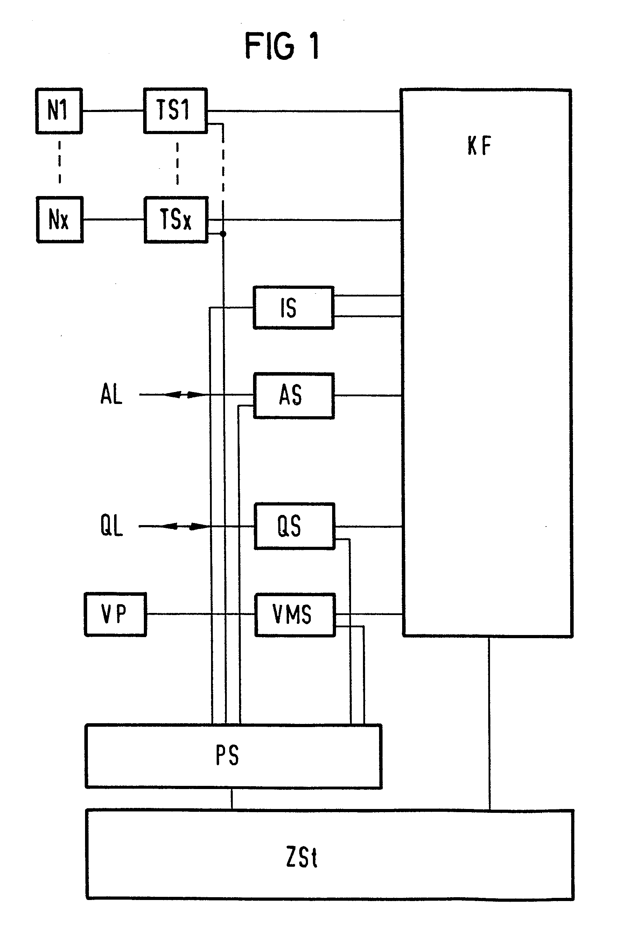

FIG 1 zeigt den grundsätzlichen Aufbei einer zentralgesteuerten Fernsprechnebenstellenanlage, bei dem nur
die zum Verständnis der vorliegenden Erfindung notwendigen Einrichtung dargestellt sind. Für die Verbindungsherstellung über das Sprechwegekoppelnetzwerk KF ist
eine zentrale Steuerung ZSt vorgesehen, die hier nicht
weiter beschrieben werden soll. Die Anschaltung der
zentralen Steuerung ZSt an die peripheren Einrichtungen erfolgt über eine periphere Steuerung PS. Als vermittlungstechnische periphere Einrichtungen sind beispielsweise Teilnehmerstellen N1, Nx mit entsprechenden
Teilnehmerschaltungen TS1, TSx vorgesehen, die über
das Sprechwegekoppelnetzwerk KF miteinander über den
Internsatz IS und mit weiterhin vorhandenen Amtsleitungsübertragungen AS und Querverbindungsleitungsübertragungen QS verbindbar sind. Weiterhin ist ein Vermittlungsplatz VP mit einem Anschaltesatz für den Vermittlungsplatz VMS eingezeichnet.

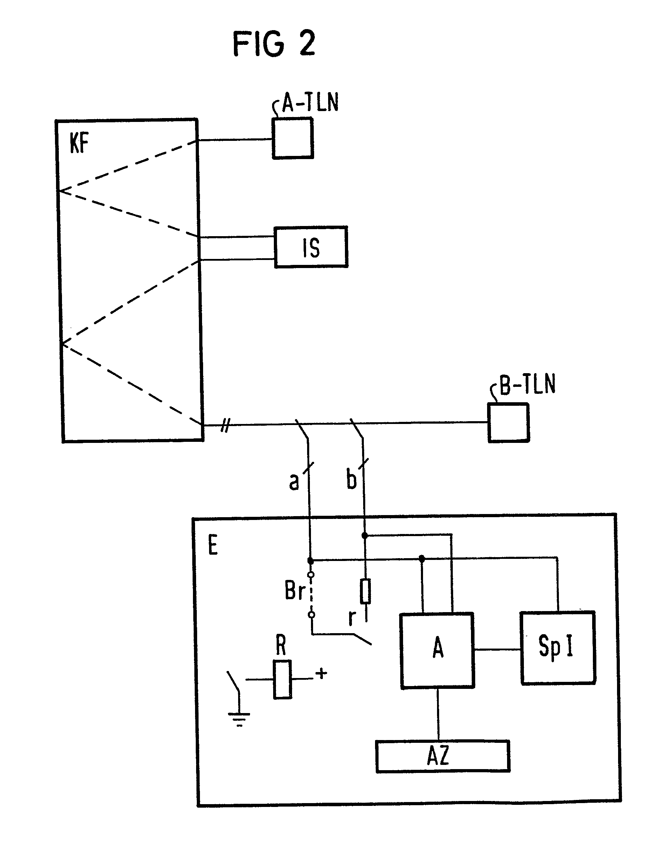

FIG 2 zeigt den Verbindungsweg zwischen der rufenden
Teilnehmerstation A-TLN und der gerufenen Teilnehmerstation B-TLN. Parallel zur Teilnehmerstation B-TLN
ist der Tonempfänger E angeordnet. Der Tonempfänger E
besteht im wesentlichen aus der eigentlichen Auswerteschaltung A, in der die betaktete Tonfrequenz ausgewertet wird, und der Anzeigevorrichtung AZ, auf die

0082512

übertragenen Ziffern angezeigt werden. Weiterhin ist eine Spannungsindikationsvorrichtung SpI vorgesehen, mittels derer der Tonempfänger E erkennt, ob die Speisung der Teilnehmerstation abgeschaltet worden ist.

Die Zeichengabe selbst erfolgt aus der Nebenstellenanlage heraus und wird durch die Software in einem peripheren nicht dargestellten Prozessor gesteuert. Besonders vorteilhaft ist es als Tonfrequenz für die Zeichenübertragung die von einem vorhandenen Hörtongenerator erzeugte Hörtonfrequenz von 425 Hz zu verwenden. In diesem Falle kann das vorhandene den Hörtongenerator anschaltende Relais mitverwendet werden, in dem es entsprechend getaktet wird. Zu Beginn jeder Übertragung wird ein sogenanntes Startbit gesendet, welches aus einem z.B. 30 msek. dauernden Hörton besteht und das in Verbindung mit der unterbrochenen Speisespannung den Tonempfänger E synchronisiert. Die Daten selber werden in einem BCD-Code übertragen wobei z.B. logisch 0 dem Ruhezustand auf der a-/b-Ader und logisch 1 einem 425 Hz-Empfang entspricht.

Wird bei dem erfindungsgemäßen Verfahren eine 8-stellige Anzeigevorrichtung AZ vorgesehen, so können bei der Anzeige einer maximal 5-stelligen Rufnummer des rufenden Teilnehmers die drei verbleibenden Stellen zur Übertragung und Anzeige weiterer Ziffern benutzt werden, die vom rufenden Teilnehmer eingegeben werden. Als Anwendungsfall wäre es denkbar, daß z.B. in einem Hotelbetrieb mittels der restlichen Ziffern Wünsche für entsprechende Serviceleistungen von den Gästen einer Zentrale mitgeteilt werden.

Der Tonempfänger E ist so aufgebaut, daß eine Anzeige bis zum nächsten Anruf bestehen bleibt und dann überschrieben wird. Mittels einer Löschtaste die ein Relais R betätigt ist es dem Teilnehmer allerdings auch möglich die angezeigte Information jederzeit zu löschen. Mittels einer in die a-b-Schleife eingefügten Brücke Br kann beim Betätigen der Löschtaste Schleifenstrom gebildet werden und mit dem Loslassen die Verbindung getrennt werden. Daraufhin erhält der rufende Teilnehmer den Besetztton und erkennt so die Annahme seines Anrufs. Diese Ausführung ist besonders vorteilhaft bei einem Betrieb ohne Fernsprecher, wie er denkbar wäre in einem Hotel, wenn der einzelne Gast lediglich mittels einer Wahl einer Zentrale einen eventuellen Wunsch mitteilen möchte.

5 Patentansprüche
2 Figuren

Patentansprüche

1. Verfahren zur Übertragung alphanumerischer Zeichen an eine über eine Zweidrahtleitung angeschlossene Teilnehmerstation in Fernmeldevermittlungsanlagen, insbesondere Fernsprechnebenstellenanlagen, d a d u r c h  g e k e n n z e i c h n e t , daß die alphanumerischen Zeichen im Binärcode mittels einer getakteten Tonfrequenz von einem internen Satz (IS) der Fernsprechnebenstellenanlage über die Anschlußleitung (a,b) der Teilnehmerstation (B-TLN) zu einem der eigentlichen Teilnehmerstation parallel geschalteten Tonempfänger (E) übertragen werden, wobei vor Übertragung des Ruftons der Speisestrom für die angewählte Teilnehmerstation (B-TLN) unterbrochen und nach Übertragung der alphanumerischen Zeichen der Speisestrom wieder angelegt wird und der Rufton ausgesendet wird.

2. Verfahren nach Anspruch 1, d a d u r c h  g e k e n n z e i c h n e t , daß die empfangenen Zeichen auf einem Display (AZ) angezeigt werden.

3. Verfahren nach Anspruch 1, d a d u r c h  g e k e n n z e i c h n e t , daß der Tonempfänger(E) nur bei abgeschaltetem Speisestrom empfangsbereit geschaltet wird.

4. Verfahren nach Anspruch 3, d a d u r c h  g e k e n n z e i c h n e t , daß zu Beginn jeder Zeichenübertragung ein Synchronisationsbit übertragen wird.

5. Verfahren nach einem der vorhergehenden Ansprüche, d a d u r c h  g e k e n n z e i c h n e t , daß als Tonfrequenz für die Zeichenübertragung eine von einem Hörtongenerator erzeugte Hörtonfrequenz (z.B. 425 Hz) verwendet wird.

FIG 1

FIG 2

Europäisches
Patentamt

**EUROPÄISCHER RECHERCHENBERICHT**

**0082512**
Nummer der Anmeldung

EP 82 11 1798

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 183 442 (SOC. ITALIANA TELECOM. SIEMENS) <br> * Seite 1, Zeile 35 - Seite 4, Zeile 5 * <br><br> --- | 1,2,4, 5 | H 04 M 1/57 |
| A | DE-A-2 720 435 (HASHIMOTO CORP.) <br> * Seite 6, Zeile 19 - Seite 7, letzte Zeile; Seite 8, Zeilen 15-18; Seite 30, Zeilen 1-12 * <br><br> ----- | 1 | |
| | | | **RECHERCHIERTE SACHGEBIETE (Int. Cl. ³)** <br><br> H 04 M |

Der vorliegende Recherchenbericht wurde für alle Patentansprüche erstellt.

| Recherchenort <br> DEN HAAG | Abschlußdatum der Recherche <br> 09-03-1983 | Prüfer <br> MIKKELSEN C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82